# EUROPEAN PATENT APPLICATION

(11) **EP 1 865 611 A2**
(43) Date of publication of application: **12.12.2007**
(21) Application number: 07075406.4
(22) Date of filing: 30.05.2007
(51) Int. Cl.: H04B 1/38

(54) **Vehicle telematics satellite data transceiver utilizing FM radio circuitry**

(30) Priority: 05.06.2006 US 422121
(71) Applicant: Delphi Technologies, Inc., Troy, Michigan 48007 (US)
(72) Inventor: Dobosz, Paul J., Noblesville, IN 46060 (US); Manlove, Gregory J., Colorado Springs, CO 80920 (US); Funk, John D., Galveston, IN 46932 (US); Marrah, Jeffrey J., Kokomo, IN 46901 (US)
(74) Representative: Denton, Michael John

(57) **Abstract**

A transceiver (10) for transmitting and receiving satellite RF signals is provided. The transceiver (10) includes RF front-end receiver circuitry (20) capable of receiving FM radio broadcast RF signals and converting the FM radio broadcast RF signals to an intermediate frequency. The RF front-end receiver circuitry (20) is configured to receive RF signals at greater than 108 MHz and convert the RF signals to an intermediate frequency. The transceiver (10) also includes signal processing circuitry (40) including at least one DSP core (42) for demodulating intermediate frequency signals provided by the front-end circuitry (20) and for modulating data to be transmitted into baseband modulated data signals, and at least one audio output (46). The transceiver (10) further includes RF transmitter circuitry (30) configured to convert the baseband modulated data signals provided by the at least one DSP core (42) into modulated transmit signals having a frequency greater than 108 MHz for transmission and transmit the modulated transmit signals.

## Description

### Technical Field

The present invention is generally directed to RF transceivers, and, more specifically, to a vehicle telematics satellite RF transceiver utilizing FM radio processing circuitry.

### Background of the Invention

The use of telematics products in vehicles has become increasingly popular as a means for providing data to and from vehicles, enabling services for vehicle occupants and markets for potential service providers. Examples of services enabled by telematics products include stolen vehicle tracking, remote vehicle unlock, remote vehicle diagnostics, and automatic 911 connection in case of airbag deployment. Typically, telematics systems utilize cellular technology to communicate data to and from the vehicle. Data is typically provided to and from vehicle telematics systems by means of modem circuitry located in the telematics system.

Although the services provided by telematics products to consumers can be valuable, the relatively high cost of telematics products and services has been a barrier to widespread adoption in vehicles. The relatively high cost is due in part to the cost of cellular services used by the telematics system to transmit telematics data to and from the vehicle. The cost is also due in part to the cost of the hardware needed to implement telematics products.

One factor driving the relatively high cost of telematics hardware is the number of cellular standards in use across the country and around the world that are typically supported by telematics transceivers. Those offering telematics products and services commercially typically need to be able to offer products to support multiple cellular phone standards such as CDMA, GSM and TDMA, for example. The need to provide various transceiver configurations to support multiple cellular standards can lead to inefficiencies and higher costs.

In addition, the components necessary to implement a given telematics transceiver configuration can be expensive. In part, this may be due to the fact that the overall volumes for given transceiver components may be small, leading to increased unit cost per component from suppliers relative to what those suppliers might charge for products taken in larger volumes. This might also be due to the expenses generally associated with qualifying new and/or semi-custom components, rather than using components that have already been qualified or are already in use in other vehicle applications.

What is needed is a cost-effective telematics product that does not rely on relatively expensive cellular service or cellular transceiver components in the modem circuitry used to provide data to and from the telematics product. What is also needed is a telematics product that can be implemented such that the modem circuitry shares components with, or utilizes some of the same components as, existing vehicle audio circuitry in order to reduce component costs.

### Summary of the Invention

According to one aspect of the present invention, a satellite radio frequency (RF) transceiver is provided. The transceiver includes RF front-end receiver circuitry capable of receiving FM radio RF signals and converting the FM RF signals to an intermediate frequency. The RF front-end receiver circuitry is also configured to receive RF data signals at frequencies greater than 108MHz and convert the RF data signals to an intermediate frequency. The transceiver also includes signal processing circuitry having at least one DSP core for demodulating intermediate-frequency FM RF signals provided by the RF front-end circuitry, and for modulating data to be transmitted into baseband data signals, and an audio output. The transceiver also includes RF transmitter circuitry for converting baseband data signals provided by the at least one DSP core into data signals at frequencies greater than 108MHz.

According to another aspect of the present invention, a satellite radio frequency (RF) transceiver is provided. The transceiver includes first RF front-end circuitry configured to receive RF data signals at frequencies greater than 108MHz and convert the RF data signals to an intermediate frequency. The transceiver also includes second RF front-end circuitry for receiving FM radio RF signals and converting the FM radio RF signals to an intermediate frequency. The transceiver also includes signal processing circuitry having at least one DSP core for demodulating intermediate-frequency data signals provided by the first RF front-end circuitry and extracting data, and for modulating data into baseband signals to be transmitted. The transceiver also includes at least one DSP core for demodulating intermediate-frequency FM radio RF signals provided by second RF front-end circuitry into audio signals, and an audio output for providing the audio signals as an output. The transceiver also includes RF transmitter circuitry for converting baseband data signals provided by the at least one DSP core into data signals at frequencies greater than 108MHz.

According to a further aspect of the present invention, a satellite radio frequency (RF) transceiver is provided. The transceiver includes first RF front-end receiver circuitry configured to receive RF data signals at frequencies greater than 108MHz and convert the RF data signals to an intermediate frequency. The transceiver also includes second RF front-end receiver circuitry for receiving FM radio RF signals and converting the FM radio RF signals to an intermediate frequency. The transceiver also includes signal processing circuitry having at least one DSP core for demodulating intermediate-frequency data signals provided by the first RF front-end circuitry and extracting data, and for modulating data into baseband signals to be transmitted. The transceiver also includes at least one DSP core for demodulating intermediate-frequency FM radio RF signals provided by second RF front-end circuitry into audio signals, and an audio output for providing the audio signals as an output. The transceiver also includes RF transmitter circuitry for converting baseband signals provided by the at least one DSP core into data signals at frequencies greater than 108MHz. The transceiver further includes an antenna diplexer and transmit/receive switch configured to allow first and second RF front-end receiver circuitry and transmitter circuitry to share an antenna.

These and other features, advantages, and objects of the present invention will be further understood and appreciated by those skilled in the art by reference to the following specification, claims, and appended drawings.

### Brief Description of the Drawings

The present invention will now be described, by way of example, with reference to the accompanying drawings, in which:
Fig 1 is a general schematic diagram illustrating a transceiver for transmitting and receiving satellite RF signals employed on a vehicle equipped with an antenna;
Fig. 2 is a block diagram illustrating a satellite RF signal transceiver according to a first embodiment of the present invention;
Fig. 3 is a block diagram illustrating a satellite RF signal transceiver, according to a second embodiment of the present invention;
Fig. 4 is a block diagram illustrating a satellite RF and FM signal transceiver, according to a third embodiment of the present invention;
Fig. 5 is a block diagram illustrating a satellite RF and FM signal transceiver, according to a fourth embodiment of the present invention;
Fig. 6 is a block diagram illustrating a satellite RF and FM signal transceiver, according to a fifth embodiment of the present invention;
Fig. 7 is a block diagram illustrating a satellite RF and FM signal transceiver, according to a sixth embodiment of the present invention; and
Fig. 8 is a block diagram illustrating a satellite RF and FM signal transceiver, according to a seventh embodiment of the present invention.

### Description of the Preferred Embodiments

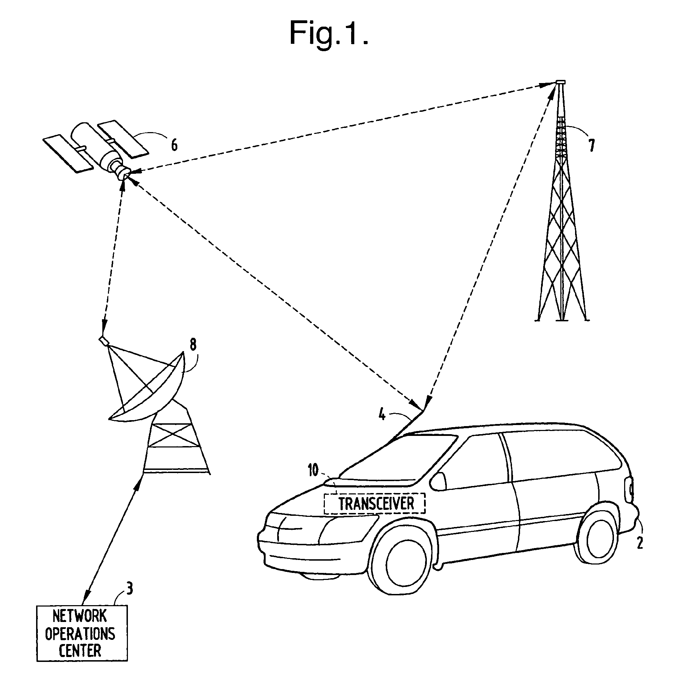

Referring to Fig. 1, a vehicle 2 is generally illustrated having a transceiver 10 that includes modem functionality for transmitting and receiving RF data signals. Vehicle 2 includes an antenna 4 coupled to transceiver 10 for providing a RF data signal received from a satellite 6 to the transceiver 10, and for transmitting a RF data signal from transceiver 10 to satellite 6. According to one exemplary embodiment, satellite 6 is an Orbcomm low-earth-orbiting (LEO) satellite, configured to receive RF signals from transceivers, such as transceiver 10, using frequencies between 148 and 150.05 MHz, and send RF signals using frequencies between 137 and 138 MHz. In operation, data is sent from a network operations center 3 to an earth gateway station 8. Earth gateway station 8 transmits the data to a satellite 6 at frequencies between 148 and 150.05 MHz, which transmits the data to antenna 4 of vehicle 2 at a frequency between 137 and 138 MHz. The satellite transmitted signal travels from antenna 4 to a transceiver 10 located in the vehicle, where the RF data signal is decoded to provide data to the vehicle and/or its occupants. It should be appreciated that in an alternate embodiment, an RF data signal relayed by a terrestrial satellite signal translator 7 could be received by antenna 4. As shown, earth gateway station 8 is configured to receive data from satellite 6 at frequencies between 137 and 138 MHz, and send the data to network operations center 3.

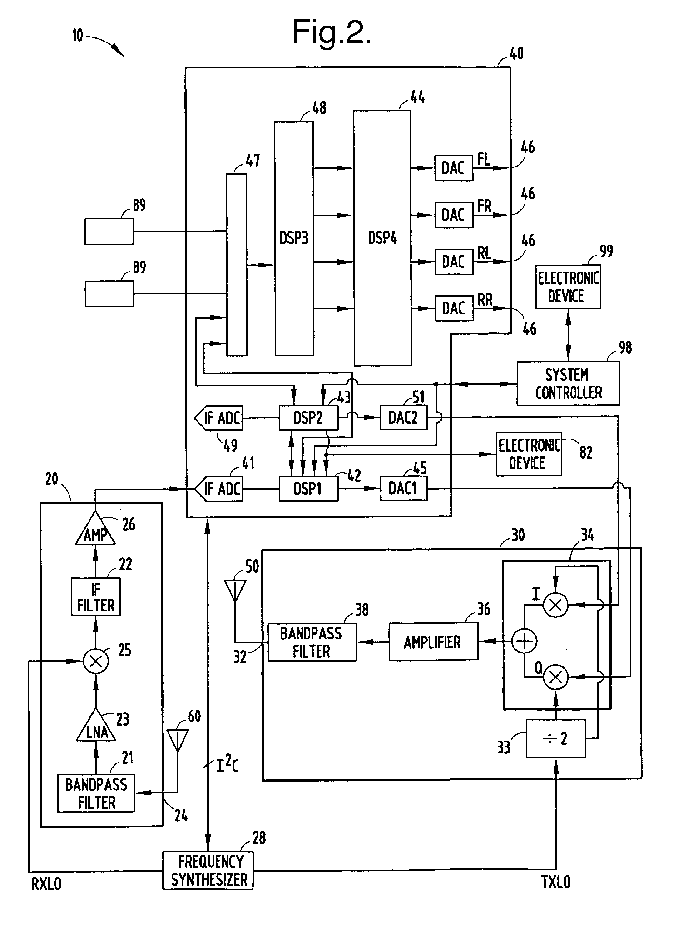

Fig. 2 generally illustrates a transceiver 10 that includes modem functionality for transmitting and receiving RF data signals, according to a first embodiment of the present invention. Transceiver 10 includes a first transmit antenna 50 coupled to a signal output 32 of RF transmitter circuitry 30. First transmit antenna 50 is configured to transmit RF data signals at frequencies between 148.00 and 150.05 MHz. In an alternative embodiment, first transmit antenna 50 and antenna 4 of Fig. 1 are the same antenna. In the present embodiment, RF transmitter circuitry 30 includes a mixer 34 configured to modulate and mix I/Q (also known as in-phase/quadrature) data signals. As shown, mixer 34 is an IF Modulator with Mixer part number PMB2208, commercially available from Infineon. Mixer 34 is coupled to an RF power amplifier 36, which is, in turn, coupled to a bandpass filter 38. RF transmitter circuitry 30 is configured to modulate and up convert data signals to transmit frequencies, and amplify and filter the signal to be transmitted prior to transmission.

As shown, the RF transmitter circuitry 30 is also coupled to digital-to-analog converters 45 and 51 of signal processing circuitry 40. Signal processing circuitry 40 is a COTS AM/FM radio receiver processor designed to demodulate standard AM and FM radio broadcasts, decode RDS information, control AM and FM RF front-end circuitry coupled to signal processing circuitry 40, and perform extensive audio stereo processing. Digital-to-analog converters 45 and 51 are configured to convert digital data received from other circuitry in signal processing circuitry 40 to analog data signals to be transmitted by transmitter circuitry 30.

As shown, digital-to-analog converters 45 and 51 are configured to receive digital signals to be transmitted from a first DSP core 42 and a second DSP core 43, respectively. These digital signals are referred to as digital data signals. First DSP core 42 and second DSP core 43 are configured to receive data to be transmitted from circuitry coupled to signal processing circuitry 40, including system controller 98 and electronic device 82. System controller 98 is a controller configured to provide data and/or control signals to signal processing circuitry 40 and other devices electrically coupled to system controller 98, such as, for example, electronic device 99. In one embodiment, system controller 98 is a microcontroller. As shown, first DSP core 42 and second DSP core 43 are electrically coupled to each other such that data may be shared between first DSP core 42 and second DSP core 43. As shown, electronic device 99 is interface circuitry configured to provide data to and from system controller 98 and devices electrically coupled to electronic device 99 (not shown), and electronic device 82 is interface circuitry configured to provide data to and from signal processing circuitry 40 and devices coupled to electronic device 82 (not shown). In alternate embodiments, electronic devices 82 and 99 may include global positioning system (GPS) devices, computers, data busses, or other electronic devices capable of sending or receiving data. In the present embodiment, data to be transmitted is provided to processing circuitry 40 by system controller 98 and electronic device 82 via an I²C bus. First DSP core 42 and second DSP core 43 convert the data to be transmitted into digital data signals formatted and structured to be consistent with the Orbcomm communication protocol. In an alternate embodiment, first DSP core 42 and second DSP core 43 convert the data to be transmitted into digital data signals formatted and structured to be consistent with satellite communication protocols other than Orbcomm.

Digital-to-analog converters 45 and 51 convert the digital data signals provided by first DSP core 42 and second DSP core 43 into analog data signals, and provide the analog data signals to RF transmitter circuitry 30. The analog data signals are processed in RF transmitter circuitry 30 by a number of processing sections. The analog data signals are first processed by mixer 34. As shown, RF transmitter circuitry 30 receives a local oscillator input TXLO from a frequency synthesizer circuitry 28. As shown, frequency synthesizer 28 is a frequency synthesizer configured to provide both transmit local oscillator (TXLO) and receive local oscillator (RXLO) signals as outputs. Frequency synthesizer circuitry 28 is shown coupled to signal processing circuitry 40 by an I²C bus. The I²C bus is used by signal processing circuitry 40 to send control signals to frequency synthesizer circuitry 28 to control the operation of frequency synthesizer 28. As shown, the TXLO input provided to transmitter circuitry 30 has its frequency divided by two by divider circuitry 33 prior to being provided to mixer circuitry 34. In an alternate embodiment, the TXLO signal is provided by receiver front-end circuitry 20 coupled to signal processing circuitry 40, or by FM mixer circuitry that is part of receiver front end circuitry coupled to signal processing circuitry 40. In yet another alternate embodiment, the TXLO signal is provided by a discrete oscillator circuit.

When the analog data signals are received by mixer 34 of RF transmitter circuitry 30 from digital-to-analog converters 45 and 41 of signal processing circuitry 40, the analog data signals are in the form of modulated baseband I and Q signals. In an alternate embodiment, the analog data signals are in the form of modulated I and Q signals at an intermediate frequency, such as, for example, 10.7 MHz. Mixer 34 uses the TXLO signal to convert the baseband analog data signals from digital-to-analog converters 45 and 51 into modulated RF analog data signals having a frequency between 148 and 150.05 MHz. After being converted to a frequency between 148 and 150.05 MHz, the modulated analog data signals are amplified by an amplifier 36 coupled to mixer 34. After being amplified by amplifier 36, the modulated analog data signals are filtered by a bandpass filter 38 coupled to amplifier 36. After being filtered by bandpass filter 38, the modulated analog data signals are provided as an output at signal output 32, which is coupled to a first transmit antenna 50. In this manner, the data provided by system controller 98 and/or electronic device 82 coupled to signal processing circuitry 40 is converted to digital data signals by fist DSP core 42 and second DSP core 43, converted by digital to analog converters 45 and 51 into analog data signals, modulated, mixed, filtered and amplified by transmitter circuitry 30, and transmitted via first transmit antenna 50 at a RF frequency between 148 and 150.05 MHz.

Transceiver 10 is also shown including a receive antenna 60 coupled to first RF front-end receiver circuitry 20 at signal input 24. Receive antenna 60 is configured to receive RF data signals at frequencies between 137 and 138 MHz. First RF front-end receiver circuitry 20 includes a bandpass filter 21, a low-noise amplifier 23, a downconverter 25, a filter 22 and an IF amplifier 26. First RF front-end receiver circuitry 20 is configured to receive RF data signals at frequencies between 137 and 138 MHz via receive antenna 60, amplify and filter the data signals, and convert the filtered and amplified data signals to an intermediate frequency of 10.7 MHz. Downconverter 25 of first RF front-end receiver circuitry 20 is shown receiving a receive local oscillator signal RXLO provided by frequency synthesizer circuitry 28. Downconverter 25 utilizes the RXLO signal to downconvert the received data signals to an intermediate frequency of 10.7MHz.

In the present embodiment, first RF front-end receiver circuitry 20 is also coupled to signal processing circuitry 40, and provides IF data signals at an intermediate frequency of 10.7 MHz to signal processing circuitry 40 to be processed. To perform these functions, signal processing circuitry 40 includes, in addition to multiple DSP cores, four outputs 46 for audio stereo signals, two inputs 89 for external components, such as cassette tapes, CDs, and phones, switches 47 for selecting among multiple inputs, RDS decoder circuitry (not shown), and other circuitry.

Although signal processing circuitry 40 is a COTS processor designed to process traditional AM and FM radio signals, the signal processing circuitry 40 has been configured to process RF satellite data signals received from first RF front-end circuitry 20 to extract data, and to process digital data signals for transmission by RF transmitter circuitry 30. Signal processing circuitry 40 has been configured by modifying the AM-FM broadcast receiver algorithms to demodulate and decode the received satellite data signals that have been transmitted consistent with the Orbcomm satellite protocol. The algorithm modification is implemented using patch RAM built into the IC for bug fixes. In an alternate embodiment, the receiver algorithm is modified to demodulate and decode data signals transmitted consistent with a satellite protocol other than the Orbcomm satellite protocol.

In operation, receive antenna 60 receives modulated RF data signals at frequencies between 137 and 138 MHz, and provides the modulated data signals to first RF front-end receiver circuitry 20 via signal input 24. The received RF data signals are filtered by a bandpass filter 21, and then provided to a low-noise amplifier 23 for amplification. The filtered and amplified RF data signals are then provided to downconverter 25. Downconverter 25 converts the received RF data signals to an intermediate frequency of 10.7 MHz, and provides the data signals at the intermediate frequency filter 22 and amplifier 26 for filtering and amplification. The resulting filtered, amplified intermediate frequency data signals are then provided to signal processing circuitry 40 for processing. Signal processing circuitry 40 of transceiver 10 includes analog-to-digital converter circuitry 41 and analog-to-digital converter circuitry 49. As shown, analog-to-digital converter circuitry 41 of signal processing circuitry 40 is coupled to first RF front-end receiver circuitry 20. Analog-to-digital converter circuitry 41, and analog-to-digital converter circuitry 49 are coupled to first DSP core 42 and second DSP core 43, respectively, of signal processing circuitry 40. Analog-to-digital converter circuitry 41 receives the data signals at an intermediate frequency of 10.7 MHz provided by first RF front-end receiver circuitry 20, converts the data signals into digital signals, and provides the digitized signals at an intermediate frequency to first DSP core 42. First DSP core 42 demodulates the intermediate frequency data signals, and provides the demodulated data signals to additional processing circuitry in signal processing circuitry 40. As shown, signal processing circuitry 40 is also coupled to a system controller 98 and electronic device 82. In the present embodiment, system controller 98 and electronic device 82 are coupled to signal processing circuitry 40 by means of an I²C bus. In an alternate embodiment, system controller 98 and electronic device 82 are coupled to signal processing circuitry 40 by a bus other than an I²C bus, such as, for example, CAN or J-1850. The data signals demodulated by first DSP core 42 are provided to system controller 98 and electronic device 82, where the data signals are further processed and/or provided to additional devices and/or circuitry. It should be appreciated that because first DSP core 42 and second DSP core 43 are electronically coupled, first DSP core 42 and second DSP core 43 could both be utilized in an alternate embodiment to demodulate the intermediate frequency data signals and provide the output to system controller 98 and/or electronic device 82.

Signal processing circuitry 40 of transceiver 10 is also shown having a third DSP core 44. Third DSP core 44 is configured to receive and further process AM/FM radio signals processed by first DSP core 42 and second DSP core 43 when either first DSP core 42 or second DSP core 43 are configured to demodulate AM/FM radio signals. Signal processing circuitry 40 is also shown coupled to external devices 89. External devices 89 are configured to provide input signals to signal processing circuitry 40 for processing, and may include CD players, cassette tape players, cellular phones, and other devices. Signal processing circuitry 40 is also shown including switching circuitry 47 and an additional DSP core 48. It should be appreciated that switching circuitry 47 and an additional DSP core 48 can be used to additionally process data received from first RF front-end receiver circuitry 20 or external devices 89, and/or data to be sent by RF transmitter circuitry 30. Switching circuitry 47 can also be employed to switch among various signal inputs from external devices 89, first DSP core 42 and second DSP core 43 to select the signals to be provided to DSP core 48 and DSP core 44 for processing.

In an alternate embodiment, second DSP core 43 is also configured to receive data to be transmitted, such as, for example, serial data, from data sources external to signal processing circuitry 40, such as, for example, system controller 98 and electronic device 82. The data sources external to signal processing circuitry 40 may be coupled to processing circuitry 40 by a communications bus, such as, for example, I²C bus. When second DSP core 43 receives data to be transmitted from these external sources, second DSP core 43 modulates the data to be transmitted into modulated digital data signals at a baseband frequency, and provides the baseband frequency modulated digital data signals to digital-to-analog converter circuitry. The digital-to-analog converter circuitry may be a part of processing circuitry 40, or may be located externally to processing circuitry 40 and electrically coupled to processing circuitry 40. The converted signals are then provided to transmitter circuitry 30 for modulation, mixing, amplification, filtering, and transmission via first transmit antenna 50.

Although the various embodiments are shown employing a COTS SAF7730HV integrated circuit to implement signal processing circuitry 40, it should be appreciated that other COTS components could be employed in an alternate embodiment to perform the desired signal processing functionality provided by signal processing circuitry 40.

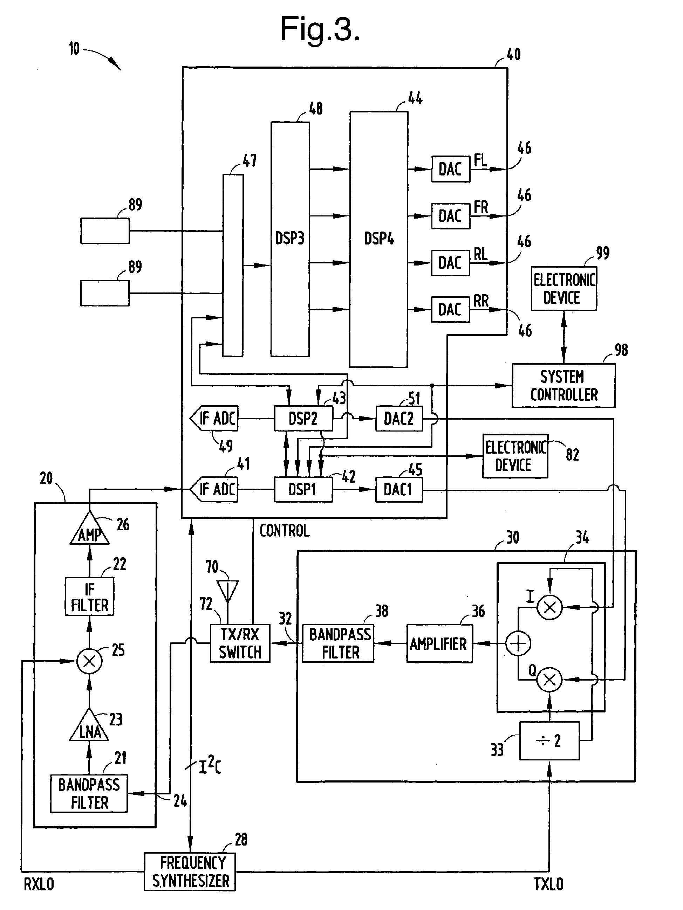

Fig. 3 generally illustrates a transceiver 10, according to a second embodiment of the present invention. The second embodiment generally illustrated in Fig. 3 is the same as the first embodiment generally illustrated in Fig. 2, with the exception of changes to the antennas coupled to first RF front-end receiver circuitry 20 and RF transmitter circuitry 30. In the second embodiment, a single antenna 70 is used for both transmit and receive purposes, rather than having a separate transmit antenna for RF transmitter circuitry 30 and a separate antenna for first RF front-end receiver circuitry 20. As shown, antenna 70 is coupled to an antenna transmit/receive switch 72. Antenna 70 is configured to transmit RF signals at frequencies between 148 and 150.05 MHz, and receive RF signals at between 137 and 138 MHz. Antenna transmit/receive switch 72 is coupled to signal input 24 of first RF front-end receiver circuitry 20 and signal output 32 of RF transmitter circuitry 30. Antenna transmit/receive switch 72 is also coupled to signal processing circuitry 40. Antenna transmit/receive switch 72 operates to select which of first RF front-end receiver circuitry 20 and RF transmitter circuitry 30 is coupled to antenna 70 at any given time. As shown, antenna transmit/receive switch 72 is coupled to signal processing circuitry 40, so that control signals can be transmitted between antenna transmit/receive switch 72 and signal processing circuitry 40. Antenna transmit/receive switch 72 includes logic circuitry (not shown) to control the transmit/receive state of antenna transmit/receive switch 72.

In operation, when antenna transmit/receive switch 72 determines, based on information provided from signal processing circuitry 40, that information is to be transmitted via RF transmitter circuitry 30, antenna transmit/receive switch 72 switches to couple signal output 32 of RF transmitter circuitry 30 to antenna 70. This enables a RF transmit signal provided by RF transmitter circuitry 30 to be transmitted external to transceiver 10 by means of antenna 70. When antenna transmit/receive switch 72 determines, based on information provided by signal processing circuitry 40, that information is to be received by first RF front-end receiver circuitry 20, antenna transmit/receive switch 72 switches, such that signal input 24 of first RF front-end receiver circuitry 20 is coupled to antenna 70. This enables a RF signal received by antenna 70 to be provided via signal input 24 to first RF front-end receiver circuitry 20 for processing. In this manner, antenna transmit/receive switch 72 operates to enable first RF front-end receiver circuitry 20 and RF transmitter circuitry 30 to share the same antenna.

Although the second embodiment illustrates signal processing circuitry 40 controlling antenna transmit/receive switch 72 to determine when first RF front-end receiver circuitry 20 and RF transmitter circuitry 30 utilize antenna 70, it should be appreciated that transmit/receive switch 72 could, in an alternate embodiment, be configured to use information provided by RF transmitter circuitry 30 and/or first RF front-end receiver circuitry 20 to determine when to switch between coupling antenna 70 to first RF front-end receiver circuitry 20 and RF transmitter circuitry 30.

In yet another alternate embodiment, antenna transmit/receive switch 72 is coupled to external logic (not shown), and the external logic is configured to cause antenna transmit/receive switch 72 to switch between coupling antenna 70 to first RF front-end receiver circuitry 20 and RF transmitter circuitry 30. With the exception of the antenna 70 and antenna transmit/receive switch 72 functionality discussed immediately above, the other elements of transceiver 10 function as discussed with respect to the first embodiment.

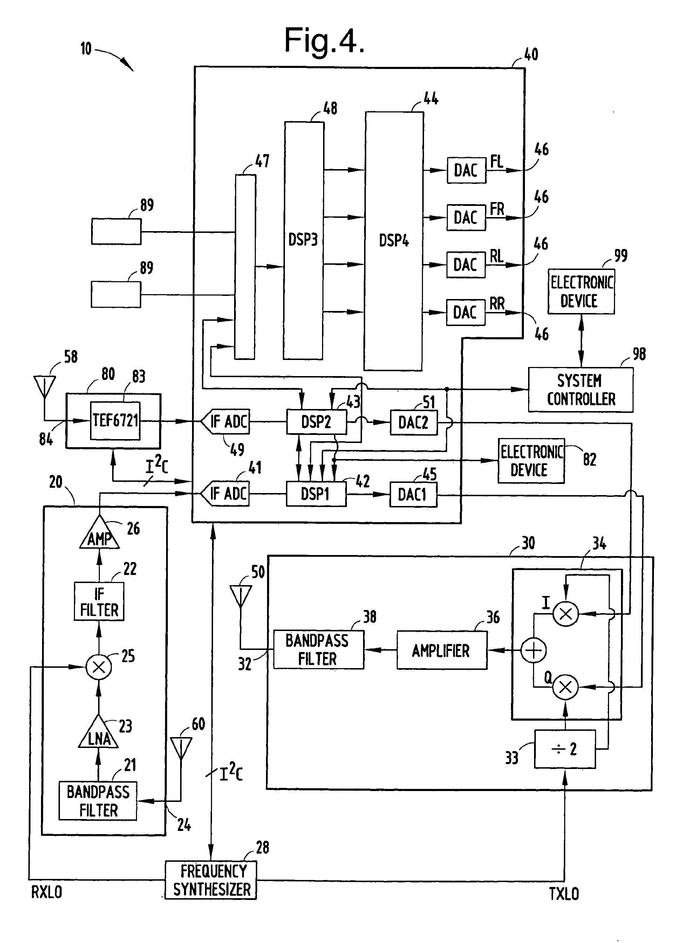

Fig. 4 generally illustrates a transceiver 10, according to a third embodiment of the present invention. Transceiver 10, according to the third embodiment, includes all of the elements of the first embodiment generally illustrated in Fig. 2, along with additional elements. The additional elements include second RF front-end receiver circuitry 80 and receive antenna 58. As shown, second RF front-end receiver circuitry 80 is coupled to signal processing circuitry 40. Second RF front-end receiver circuitry 80 also includes a second signal input 84 to which receive antenna 58 is coupled. Second RF front-end receiver circuitry 80 also includes FM mixer circuitry 83, which is a COTS integrated circuit TEF6721HL, commercially available from Philips Semiconductors. In an alternate embodiment, second RF front-end receiver circuitry 80 includes a COTS integrated circuit including FM mixer circuitry 83.

As shown, second RF front-end receiver circuitry 80 is coupled to signal processing circuitry 40 by both a signal line and an I²C bus. The I²C bus provides a means for communication of data and control signals between second RF front-end receiver circuitry 80 and signal processing circuitry 40, such that signal processing circuitry 40 can control the operations of second RF front-end receiver circuitry 80. In an alternate embodiment, second RF front-end receiver circuitry is not coupled to signal processing circuitry 40 by an I²C bus, and is not controlled by signal processing circuitry 40. In the present embodiment, receive antenna 58 is configured to receive signals in the AM and FM radio bands. Second RF front-end receiver circuitry 80 receives AM and/or FM radio signals via receive antenna 58, and processes those signals before providing the signals to signal processing circuitry 40. Mixer circuitry 83 of second RF front-end receiver circuitry 80 receives modulated RF signals at AM and/or FM radio frequencies, and converts the modulated signals to an intermediate frequency of 10.7 MHz. These modulated signals at an intermediate frequency of 10.7 MHz are provided to signal processing circuitry 40.

Second DSP core 43 of signal processing circuitry 40 is shown coupled to a switch box and an analog-to-digital converter 49. Analog-to-digital converter 49 receives modulated AM and/or FM radio signals at an intermediate frequency of 10.7 MHz from second RF front-end receiver circuitry 80, and converts the modulated signals into digitally modulated signals at an intermediate frequency of 10.7 MHz. These signals are then provided to second DSP core 43. Second DSP core 43, which is configured in this embodiment to demodulate AM and/or FM radio signals, receives the intermediate frequency digitally modulated signals, and demodulates the digital signals into audio signals. Second DSP core 43 then provides the audio signals to additional processing circuitry of signal processing circuitry 40 by means of the switch 47. Additional circuitry in signal processing circuitry 40 processes the audio signals provided by second DSP core 43, and provides them as digital and/or analog audio signals to at least one audio output 46. The audio output 46 is coupled to an audio speaker (not shown), so that the audio programming can be perceived by vehicle occupants.

The additional elements of transceiver 10 not immediately discussed above are the same as the elements detailed in the first embodiment shown in Fig. 2, and operate in the same manner as described with respect to that first embodiment.

Mixer circuitry 83, as shown, is a COTS car radio tuner front-end for digital IF, Part No. TEF6721HL, commercially available from Philips Semiconductors. It should be appreciated that in the present embodiment, transceiver 10 is able, using COTS car radio tuner front-end processors and a COTS processor designed to process AM and FM radio signals, to provide both AM/FM car radio functionality and RF data transceiver capabilities.

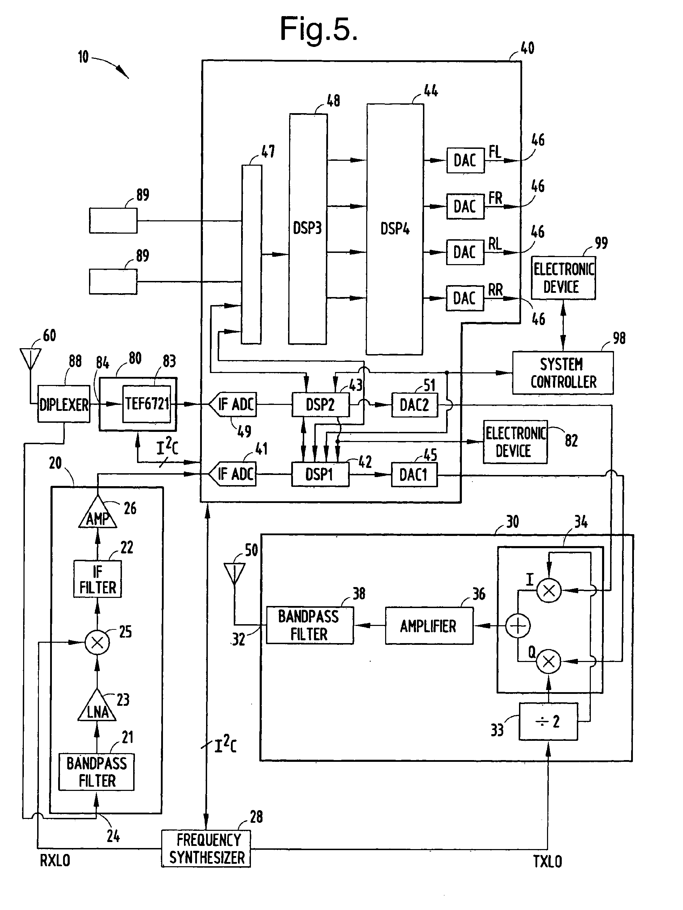

Fig. 5 generally illustrates a transceiver 10, according to a fourth embodiment of the present invention. The fourth embodiment is identical to the third embodiment generally illustrated in Fig. 4, and discussed above, with the exception of changes to the antennas and related antenna circuitry.

In the third embodiment generally illustrated in Fig. 4, each of first RF front-end receiver circuitry 20, second RF front-end receiver circuitry 80, and RF transmitter circuitry 30 was coupled to its own antenna 60, 58, and 50, respectively.

In the fourth embodiment, the number of antennas has been reduced to two by allowing first RF front-end receiver circuitry 20 and second RF front-end receiver circuitry 80 to share one receive antenna 60. As shown, the transceiver 10 in the fourth embodiment includes an antenna diplexer 88 coupled to a receive antenna 60. Receive antenna 60 is configured to receive traditional AM RF radio signals at frequencies greater than 550 kHz, FM RF radio signals at frequencies greater than 87.5 MHz, and RF signals between 137 and 138 MHz. Antenna diplexer 88 is coupled to second RF front-end receiver circuitry 80 by means of second signal input 84. Diplexer 88 is also coupled to first RF front-end receiver circuitry 20 by means of signal input 24. In this manner, a signal received by Receive antenna 60 is provided via antenna diplexer 88 to both second RF front-end receiver circuitry 80 and first RF front-end receiver circuitry 20.

The additional elements of transceiver 10 not immediately discussed above are identical to, and function in the same manner as, the elements discussed with respect to the third embodiment generally illustrated in Fig. 4.

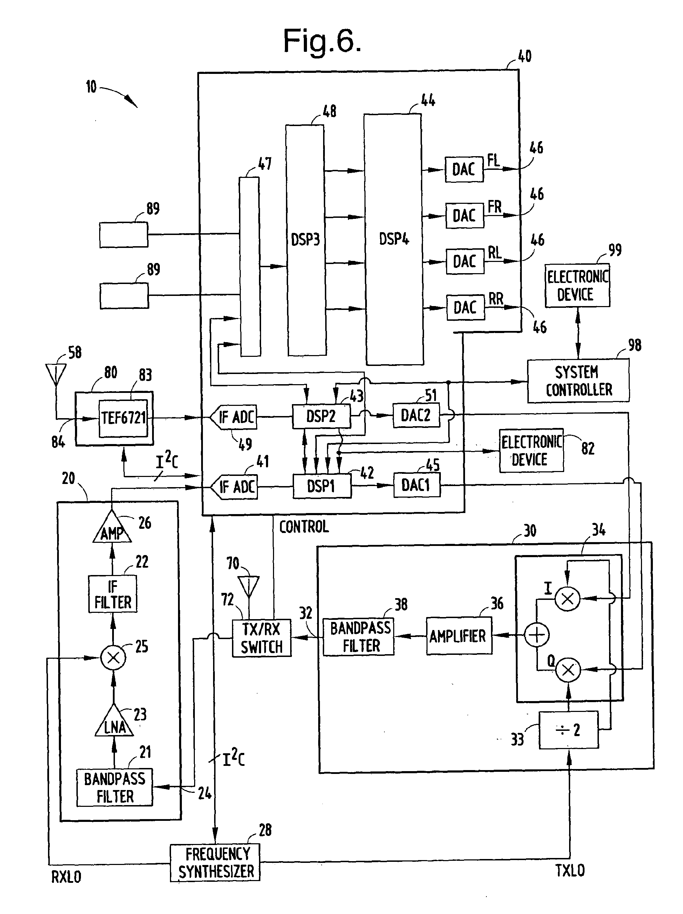

Fig. 6 generally illustrates a transceiver 10, according to a fifth embodiment of the present invention. The fifth embodiment is identical to the third embodiment generally illustrated in Fig. 4, with the exception of changes to the antennas and related antenna circuitry.

In the third embodiment generally illustrated in Fig. 4, each of first RF front-end receiver circuitry 20 and second RF front-end receiver circuitry 80 was coupled to its own receive antenna 60 and 58, respectively, while RF transmitter circuitry 30 was coupled to its own first transmit antenna 50.

In the fifth embodiment, first RF front-end receiver circuitry 20 and RF transmitter circuitry 30 share a single antenna 70. As shown, transceiver 10 includes an antenna transmit/receive switch 72. Antenna transmit/receive switch 72 is coupled to an antenna 70. Antenna 70 is configured to receive RF signals at frequencies between 137 and 138 MHz, and to transmit RF signals at frequencies between 148 and 150.05 MHz. Antenna transmit/receive switch 72 is also coupled to first RF front-end receiver circuitry 20 by means of signal input 24, and RF transmitter circuitry 30 by means of signal output 32. Antenna transmit/receive switch 72 is also coupled to signal processing circuitry 40, such that signal processing circuitry 40 and antenna transmit/receive switch 72 can communicate data and control information with each other. Antenna transmit/receive switch 72 is configured to control which of first RF front-end receiver circuitry 20 and RF transmitter circuitry 30 is coupled to antenna 70 at any given time.

Antenna transmit/receive switch 72 functions in the present embodiment in the same manner as discussed with respect to the second embodiment generally illustrated in Fig. 3. In other words, antenna transmit/receive switch 72 receives information from signal processing circuitry 40 indicative of whether transceiver 10 is to transmit or receive. When antenna transmit/receive switch 72 determines that a transmit state is desired, antenna transmit/receive switch 72 switches such that RF transmitter circuitry 30 is coupled to antenna 70, enabling a RF signal from RF transmitter circuitry 30 to be transmitted via antenna 70. When antenna transmit/receive switch 72 determines that information is to be received in transceiver 10, antenna transmit/receive switch 72 switches such that first RF front-end receiver circuitry 20 is coupled to antenna 70, allowing RF signals received by antenna 70 to be provided to first RF front-end receiver circuitry 20 for processing. In this manner, one antenna 70 can be shared by both first RF front-end receiver circuitry 20 and RF transmitter circuitry 30 for transmitting and receiving RF signals using antenna 70.

The other elements of transceiver 10 not immediately discussed above operate in the same manner as the third embodiment of the present invention generally illustrated in Fig. 4.

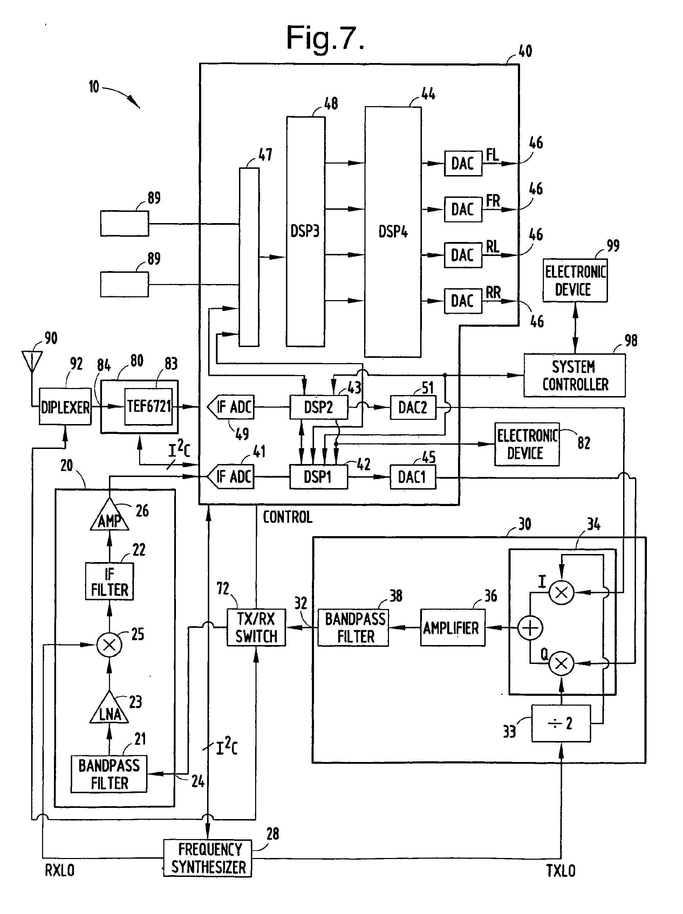

Fig. 7 generally illustrates a transceiver 10, according to a sixth embodiment of the present invention. Transceiver 10 of the sixth embodiment is identical to the fifth embodiment of the present invention generally illustrated in Fig. 6, with the exception of changes to the antennas and related circuitry. Rather than employing two antennas, as discussed with respect to the fifth embodiment of the present invention generally illustrated in Fig. 6, the transceiver of the sixth embodiment utilizes only one antenna 90.

As shown, transceiver 10 includes a transmit/receive antenna 90 coupled to an antenna diplexer 92. As shown, antenna 90 is configured to receive traditional AM and FM radio signals, and RF signals at frequencies between 137 and 138 MHz, and to transmit RF signals at frequencies between 148 and 150.05 MHz. Diplexer 92 is coupled to second signal input 84 of second RF front-end receiver circuitry 80. As shown, second RF front-end receiver circuitry 80 functions in an identical manner to second RF front-end receiver circuitry 80 as discussed with respect to the third embodiment of the present invention generally illustrated in Fig. 4. In the present embodiment, antenna diplexer 92 is coupled to second RF front-end receiver circuitry 80 by means of second signal input 84. In this manner, RF AM and FM radio signals received by antenna 90 are provided to second RF front-end receiver circuitry 80, which then processes those signals as discussed in previous embodiments.

Antenna diplexer 92 is also shown coupled to an antenna transmit/receive switch 72. Antenna transmit/receive switch 72 is coupled to first RF front-end receiver circuitry 20 by means of signal input 24, and RF transmitter circuitry 30 by means of signal output 32. Antenna transmit/receive switch 72 is also coupled to signal processing circuitry 40, such that signal processing circuitry 40 and antenna transmit/receive switch 72 can communicate data and control information with each other. In operation, antenna transmit/receive switch 72 operates in a manner similar to that discussed above with respect to the fifth embodiment of the present invention. However, in the sixth embodiment, rather than being directly coupled to an antenna, the antenna transmit/receive switch 72 is coupled to antenna diplexer 92, and acts to select which of first RF front-end receiver circuitry 20 and RF transmitter circuitry 30 is coupled to antenna diplexer 92 at any given time.

In operation, antenna transmit/receive switch 72 determines, based on information provided by signal processing circuitry 40, whether RF signals are to be transmitted from RF transmitter circuitry 30, or received by first RF front-end receiver circuitry 20, via antenna 90. When antenna transmit/receive switch 72 determines that RF signals are to be transmitted, antenna transmit/receive switch 72 switches such that RF transmitter circuitry 30 is coupled to antenna diplexer 92. This enables RF signals from RF transmitter circuitry 30 to be transmitted by antenna 90 via antenna transmit/receive switch 72, and antenna diplexer 92. If antenna transmit/receive switch 72 determines that RF signals are to be received in first RF front-end receiver circuitry 20, antenna transmit/receive 72 switches such that first RF front-end receiver circuitry 20 is coupled to antenna diplexer 92. This enables RF signals received by antenna 90 to be received and processed by first RF front-end receiver circuitry 20 via antenna transmit/receive switch 72 and antenna diplexer 92.

Elements of transceiver 10 not immediately discussed above operate in an identical manner to corresponding elements discussed with respect to the fifth embodiment generally illustrated in Fig. 6.

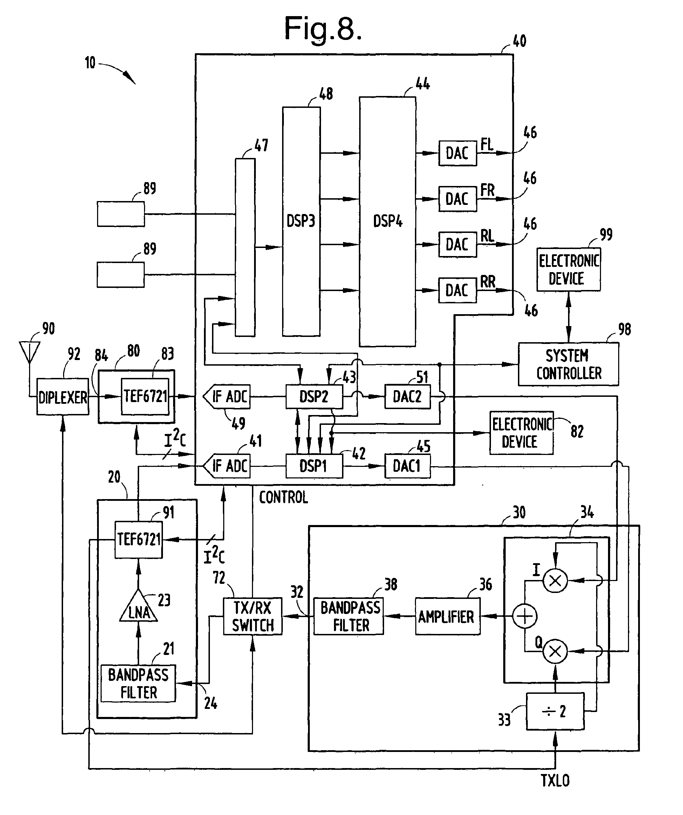

Fig. 8 generally illustrates a seventh embodiment of the present invention. Transceiver 10 of the seventh embodiment is similar to the sixth embodiment of the present invention generally illustrated in Fig. 7, with the exception of changes first RF front-end circuitry 20 and frequency synthesizer circuitry 28. In the present embodiment, downconverter 25, filter 22 and amplifier 26 of first RF front-end circuitry 20, and frequency synthesizer 28 of the embodiment generally illustrated in Fig. 7 are implemented by a Commercial-Off-The-Shelf (COTS) car radio tuner front-end 91, Part No. TEF6721HL, commercially available from Philips Semiconductors. Although the COTS car radio tuner front-end 91 is designed to process standard FM radio broadcast signals, it is reconfigured in this embodiment to process RF signals between 137 and 138 MHz. The COTS car radio tuner front-end 91 is reconfigured to function in this manner by altering in software the divider ratio of the synthesizer to change the local oscillator synthesizer tuning range so that the COTS car radio tuner front-end is capable of tuning the frequency range of 137-138 MHz with appropriate frequency step sizes.

In this embodiment, the COTS car radio tuner front-end 91 also utilizes its own internal local oscillator to provide the RXLO signal rather than utilizing an RXLO signal provided by frequency synthesizer circuitry 28. In addition, the internal local oscillator of the COTS car radio tuner front-end 91 provides a TXLO signal that is utilized by RF transmitter circuitry 30, obviating the need for frequency synthesizer circuitry 28 to provide the TXLO signal to RF transmitter circuitry 30. The COTS car radio tuner front-end 91 is coupled to signal processing circuitry 40 by an I²C bus, which is used to send control signals between the COTS car radio tuner front-end 91 and signal processing circuitry 40. In the present embodiment, signal processing circuitry 40 is a COTS dual IF car radio and audio DSP integrated circuit, Part No. SAF7730HV, commercially available from Philips Semiconductors. The SAF7730HV has been reconfigured to process RF satellite data signals received from first RF front-end circuitry 20 to extract data, and to process digital data signals for transmission by RF transmitter circuitry 30, as discussed above.

With respect to the embodiments discussed above, although specific COTS integrated circuits from Philips Semiconductors were disclosed being used for first RF front-end receiver circuitry 20, second RF front-end receiver circuitry 80, and signal processing circuitry 40, it should be appreciated that in alternate embodiments, other COTS AM/FM radio receiver integrated circuits or circuitry could be employed to implement the present invention.

Although the above-discussed embodiments provide for RF signals to be received and transmitted, it should be appreciated that in alternate embodiments, RF signals at frequencies greater than 108 MHz can be transmitted and received by the transceiver 10. In addition, although the disclosed embodiments provide for the filtering and amplification of transmit signals in RF transmitter circuitry 30 after the transmit signals have been mixed, it should be appreciated that in an alternate embodiment, filtering and/or amplification of the transmit signals could occur prior to modulation.

In yet another alternate embodiment of the present invention, signal processing circuitry 40 is a COTS AM/FM radio receiver processor designed to demodulate weather band broadcasts in addition to standard AM and FM radio broadcasts. In still another alternate embodiment of the present invention, a COTS car radio tuner front-end designed to process standard AM, FM and weather band broadcasts is used to implement at least one of filtering, demodulation and amplification functions of first RF front-end circuitry 20.

The embodiments of the present invention described above advantageously provide for telematics transceivers configured to communicate with Orbcomm LEO satellites. The transceivers are made utilizing COTS AM/FM radio receiver chipsets to reduce cost and avoid dependence on relatively expensive cellular components and service. The embodiments of the present invention also advantageously provide for incorporating a telematics Orbcomm satellite modem into a car radio using existing COTS AM/FM radio receiver chipsets by minor reconfiguration of the existing chipsets' hardware and software algorithms.

The above description is considered that of the preferred embodiments only. Modifications of the invention will occur to those skilled in the art, and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A transceiver (10) for transmitting and receiving RF signals, comprising:
first RF front-end receiver circuitry (20) comprising FM mixer circuitry (91) capable of receiving standard FM radio broadcast RF signals and converting the FM radio broadcast RF signals to an intermediate frequency, said first RF front-end receiver circuitry (20) being configured to receive RF data signals at frequencies greater than 108 MHz and convert the RF data signals to intermediate frequency (IF) data signals;
signal processing circuitry (40) coupled to said first RF front-end receiver circuitry (20), said signal processing circuitry (40) comprising at least one DSP core (42) configured to receive the IF data signals from said first RF front-end receiver circuitry (20) and demodulate the IF data signals to extract data, said at least one DSP core (42) also being configured to modulate data to be transmitted into modulated transmit data signals, said signal processing circuitry (40) further comprising at least one audio output (46) configured to provide at least one of digital and analog audio output; and
RF transmitter circuitry (30) coupled to said signal processing circuitry (40) and comprising a mixer (34), an RF power amplifier (36), and at least one filter (38), wherein said RF transmitter circuitry (30) is configured to receive the modulated transmit data signals from said processing circuitry (40), convert the modulated data signals in the mixer (34) into modulated data signals having a frequency greater than 108 MHz, amplify and filter the converted modulated transmit data signals, and transmit the filtered and amplified modulated data transmit signals.

2. The transceiver of claim 1, further comprising analog-to-digital converter circuitry (41) coupled to said at least one DSP core (42) and said first RF front-end receiver circuitry (20), and digital-to-analog converter circuitry (45) coupled to said at least one DSP core (42) and said RF transmitter circuitry (20), wherein said analog-to-digital converter circuitry (41) is configured to convert the modulated IF data signals from said first RF front-end receiver circuitry (20) into digital modulated IF data signals, and wherein said digital-to-analog converter circuitry (45) is configured to convert modulated digital data signals at an intermediate frequency provided by said at least one DSP core (42) into analog modulated transmit data signals at an intermediate frequency, and provide the analog modulated transmit data signals to said RF transmitter circuitry (30).

3. The transceiver (10) of claim 1, wherein the FM mixer circuitry (91) of said first RF front-end receiver circuitry (20) is configured to receive RF data signals at frequencies between 137 and 138 MHz and convert the RF data signals to IF data signals.

4. The transceiver (10) of claim 3, further comprising a first transmit antenna (50) coupled to said RF transmitter circuitry (30), wherein said first transmit antenna (50) is configured to transmit the resulting modulated transmit data signals provided by said RF transmitter circuitry (30).

5. The transceiver (10) of claim 4, further comprising a second receive antenna (60) coupled to said first RF front-end receiver circuitry (20), wherein said second receive antenna (60) is configured to receive RF data signals having a frequency greater than 108 MHz, and to provide the received RF data signals to said first RF front-end receiver circuitry (20).

6. The transceiver (10) of claim 3, further comprising an antenna transmit/receive switch (72) coupled to said first RF front-end receiver circuitry (20), said RF transmitter circuitry (30), and an antenna (70), wherein said antenna (70) is configured to both send and receive RF signals, and wherein said transmit/receive switch (72) is configured to electrically couple said RF transmitter circuitry (30) to said antenna (70) when the transceiver (10) is in a transmit state, and wherein said transmit/receive switch (72) is configured to electrically couple said first RF front-end receiver circuitry (20) to said antenna (70) when the transceiver (10) is in a receive state.

7. The transceiver (10) of claim 6, wherein said transmit/receive switch (72) is coupled to said signal processing circuitry (40), and wherein said transmit/receive switch (72) determines which of said first RF front-end receiver circuitry (20) and said RF transmitter circuitry (30) are connected to said antenna (70) based on signals received from said signal processing circuitry (40).

8. The transceiver (10) of claim 7, wherein said signal processing circuitry (40) is coupled to said first RF front-end receiver circuitry (20) by a communications bus, and wherein the functionality of said first RF front-end receiver circuitry (20) is at least partially controlled by said signal processing circuitry (40) by signals sent over the communications bus.

9. The transceiver (10) of claim 7, wherein the bus is an I²C bus.

10. The transceiver (10) of claim 3, wherein said transceiver (10) further comprises second RF front-end receiver circuitry (80) coupled to said signal processing circuitry (40), said second RF front-end receiver circuitry (80) comprising FM mixer circuitry (83) configured to receive FM radio broadcast RF signals and convert the FM radio broadcast RF signals to an intermediate frequency;

11. The transceiver (10) of claim 10, further comprising at least one DSP core (43) configured to receive FM radio Broadcast signals at an intermediate frequency from said second RF front-end receiver circuitry (80), demodulate the FM radio broadcast signals into audio signals, and provide the audio signals to the at least one audio output (46).

12. The transceiver (10) of claim 10, further comprising a first transmit antenna (50) coupled to said RF transmitter circuitry (30), wherein said first transmit antenna (50) is configured to transmit the resulting modulated transmit data signals provided by said RF transmitter circuitry (30).

13. The transceiver (10) of claim 12, further comprising a second receive antenna (60) coupled to said first RF front-end receiver circuitry (20), wherein said second receive antenna (60) is configured to receive RF data signals having a frequency greater than 108 MHz, and to provide the received RF data signals to said first RF front-end receiver circuitry (20).

14. The transceiver (10) of claim 12, further comprising an antenna diplexer (88) coupled to a second receive antenna (60), said first RF front-end receiver circuitry (20) and said second RF front-end receiver circuitry (80), wherein said antenna diplexer (88) is configured to couple said second receive antenna (60) to said first RF front-end receiver circuitry (20) and said second RF front-end receiver circuitry (80), and wherein said second receive antenna (60) is configured to receive FM radio Broadcast RF signals and RF data signals at frequencies greater than 108 MHz, and wherein said second receive antenna (60) is further configured to provide FM radio Broadcast RF signals to said second RF front-end receiver circuitry (80), and to provide RF data signals at one or more frequencies greater than 108 MHz to said first RF front-end receiver circuitry (20).

15. The transceiver (10) of claim 10, further comprising an antenna transmit/receive switch (72) coupled to said first RF front-end receiver circuitry (20), said RF transmitter circuitry (30), and an antenna (70), wherein said antenna (70) is configured to both send and receive RF signals at frequencies greater than 108 MHz, and wherein said transmit/receive switch (72) is configured to electrically couple said RF transmitter circuitry (30) to said antenna (70) when the transceiver (10) is in a transmit state, and wherein said transmit/receive switch (72) is configured to electrically couple said first RF front-end receiver circuitry (30) to said antenna (70) when the transceiver (10) is in a receive state.

16. The transceiver (10) of claim 15, wherein said transmit/receive switch (72) is coupled to said signal processing circuitry (40), and wherein said transmit/receive switch (22) determines which of said first RF front-end receiver circuitry (20) and said RF transmitter circuitry (30) are connected to said antenna (70) based on signals received from said signal processing circuitry (40).

17. The transceiver (10) of claim 10, further comprising an antenna diplexer (92) coupled to a third transceiver antenna (90), said second RF front-end receiver circuitry (80), and an antenna transmit/receive switch (72) coupled to said first RF front-end receiver circuitry (20) and said RF transmitter circuitry (30), wherein said third transceiver antenna (90) is configured to receive signals having frequencies greater than 500 kHz and provide those signals to second RF front-end receiver circuitry (80) and said antenna transmit/receive switch (72), and wherein said third transceiver antenna (90) is configured to transmit signals received via said antenna transmit/receive switch (72) from said RF transmitter circuitry (30) at greater than 108 MHz, and wherein said antenna transmit/receive switch (72) is configured to electrically couple said RF transmitter circuitry (30) to said antenna (90) when the transceiver (10) is in a transmit state, and wherein said transmit/receive switch (72) is configured to electrically couple said first RF front-end receiver circuitry (20) to said antenna (90) when the transceiver (10) is in a receive state.

18. The transceiver (10) of claim 17, wherein said transmit/receive switch (72) is coupled to said signal processing circuitry (40), and wherein said transmit/receive switch (72) determines which of said first RF front-end receiver circuitry (20) and said RF transmitter circuitry (30) are connected to said antenna (90) based on signals received from said signal processing circuitry (40).

19. The transceiver (10) of claim 1, wherein the intermediate frequency is 10.7 MHz.

20. A transceiver (10) for transmitting and receiving satellite RF signals, comprising:
first RF front-end receiver circuitry (20) configured to receive RF data signals at frequencies greater than 108 MHz and convert the RF data signals to data signals at an intermediate frequency;
second RF front-end receiver circuitry (80) comprising FM mixer circuitry configured to receive FM radio Broadcast RF signals and convert the FM radio Broadcast RF signals to FM radio Broadcast signals at an intermediate frequency;
signal processing circuitry (40) coupled to said first and second RF front-end receiver circuitry (20,80), said signal processing circuitry (40) comprising at least one DSP core (42) configured to receive the data signals at an intermediate frequency from said first RF front-end receiver circuitry (20) and demodulate the data signals to extract data, said at least one DSP core (42) being configured to modulate data to be transmitted into modulated transmit data signals at an intermediate frequency range, at least one audio output (46) configured to provide at least one of an analog and digital audio signal, and at least one DSP core (43) configured to receive the FM RF radio signals at an intermediate frequency range from said second RF front-end receiver circuitry (80), demodulate the signals into audio signals, and provide the audio signals to the at least one audio output (46); and
RF transmitter circuitry (30) coupled to said signal processing circuitry (40), said RF transmitter circuitry (30) being configured to receive the modulated transmit data signals in an intermediate frequency range from said signal processing circuitry (40), convert the modulated data signals into modulated data signals having a frequency greater than about 108 MHz, amplify and filter the converted modulated data signals, and transmit the filtered and amplified data signals as an output.

21. The transceiver (10) of claim 20, further comprising at least one antenna (90) coupled to said first RF front-end receiver circuitry (20), said second RF front-end receiver circuitry (80), and said RF transmitter circuitry (30).

22. The transceiver (10) of claim 21, wherein said at least one antenna (90) is coupled to a vehicle.
